(19) Europäisches Patentamt
European Patent Office
Office européen des brevets

(11) **EP 3 063 940 B1**

(12) **EUROPEAN PATENT SPECIFICATION**

(45) Date of publication and mention of the grant of the patent:
**02.03.2022 Bulletin 2022/09**

(21) Application number: **14792781.8**

(22) Date of filing: **22.10.2014**

(51) International Patent Classification (IPC):
**H04N 19/503** *(2014.01)*    **H04N 19/124** *(2014.01)*
**H04N 19/177** *(2014.01)*

(52) Cooperative Patent Classification (CPC):
**H04N 19/503; H04N 19/124; H04N 19/177**

(86) International application number:
**PCT/EP2014/072681**

(87) International publication number:
**WO 2015/062942 (07.05.2015 Gazette 2015/18)**

(54) **METHOD AND DEVICE FOR PREDICTIVE CODING/DECODING OF A GROUP OF PICTURES OF A SEQUENCE OF IMAGES WITH CONVERSION OF THE DYNAMIC OF THE VALUES OF THE PIXELS**

VERFAHREN UND VORRICHTUNG ZUR PRÄDIKTIVEN CODIERUNG/DECODIERUNG EINES GRUPPE AN BILDERN EINER BILDFOLGE MIT UMWANDLUNG DER DYNAMIK DER PIXELWERTE

PROCÉDÉ ET DISPOSITIF DE CODAGE/DÉCODAGE PRÉDICTIF D'UN GROUPE D'IMAGES D'UNE SUITE D'IMAGES AVEC CONVERSION DE LA DYNAMIQUE DES VALEURS DES PIXELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2013 FR 1302542**
**20.05.2014 FR 1454527**

(43) Date of publication of application:
**07.09.2016 Bulletin 2016/36**

(73) Proprietor: **InterDigital Madison Patent Holdings, SAS**
**75017 Paris (FR)**

(72) Inventors:
• **LE PENDU, Mikael**
**F-35576 Cesson-sevigne (FR)**
• **THOREAU, Dominique**
**F-35576 Cesson-sevigne (FR)**
• **GUILLEMOT, Christine**
**F-35042 Rennes (FR)**

• **LELEANNEC, Fabrice**
**F-35576 Cesson-sevigne (FR)**
• **BOITATD, Ronan**
**F-35576 Cesson-sevigne (FR)**

(74) Representative: **Interdigital**
**975, avenue des Champs Blancs**
**35576 Cesson-Sévigné Cedex (FR)**

(56) References cited:
**EP-A1- 2 317 769    EP-A1- 2 360 926**
**EP-A1- 2 445 214**

• **LE PENDU MIKAEL ET AL: "Adaptive re-quantization for high dynamic range video compression", 2014 IEEE INTERNATIONAL CONFERENCE ON ACOUSTICS, SPEECH AND SIGNAL PROCESSING (ICASSP), IEEE, 4 May 2014 (2014-05-04), pages 7367-7371, XP032617403, DOI: 10.1109/ICASSP.2014.6855031 [retrieved on 2014-07-11]**

**EP 3 063 940 B1**

**Description**

**1. Domain of the invention**

The invention relates to the general domain of image coding and more particularly to that of the coding of image pixel values expressed in a dynamic greater than a target dynamic.

**2. Prior art**

This section is designed to introduce the different aspects of the prior art that can be related to the different aspects of the invention that are described and/or claimed below. This part is useful as it supplies the reader with basic information that will make it easier for them to understand different aspects of the invention. However, the summary of this information is only to be considered from this viewpoint and must never be considered as a summary of the prior art admitted by the inventor.

Historically, each component (luminance and chrominance) of an image is expressed in an 8-bit dynamic, that is that the integer value of each pixel of each component is represented in 8 bits.

However, it may prove necessary to handle images whose dynamics are greater than 8 bits. This is the case, for example, when floating values are used to express high dynamic image pixels. These values are generally defined by the following equation:

$$C_p = M.2^E \quad (1)$$

with $C_p$ one of the R, G or B components of a pixel, M and E representing respectively the mantissa and the exponent.

Representations such as RGBE (E stands for exponent), or even *OpenEXR RGB half float (cf* K. Myszkowski, R Mantiuk, G Krawczyk "High Dynamic Range video," Synthesis Lectures on Computer Graphics and Animation, Morgan & Claypool Publishers 2008) have components that are coded with 5 mantissa bits and 10 exponent bits for the OpenEXR format and 8 mantissa bits and 8 exponent bits for the RGBE format.

Hence, the floating values of image pixels are generally expressed by:

- a mantissa comprising Nm bits that enables the mantissa values to extend between 0 and $2^{Nm}$-1 , and
- an exponent of Nm bits that enables the exponent values to extend between 0 and $2^{Ne}$-1.

Moreover, the values expressed with a floating representation comprising 1 sign bit, Nm mantissa bits and Ne exponent bits, can vary from 0 to $(2^{Nm}-1) \times 2^{(2^{Ne-1})}$.

The floating values of image pixels can be obtained, for example, by capture that is from one or more cameras. But these floating values can also be obtained from calculation. This is the case, for example, when it is required to reduce a sequence of images (for example, expressed in 10 bits) to obtain a sequence of images of a reduced dynamic (for example, expressed in 8 bits). To carry out this dynamic conversion, it is standard to use a method that firstly consists of dividing the integer values of the pixels by a factor equal to $2^n$ (with n the difference in bits used to express the dynamic of the images, here n=2). The resulting values of these divisions are floating values as some initial values of the pixels cannot be divided by 4.

Standard methods for coding sequences of images are designed for coding integer data with a limited dynamic.

These methods use, in particular, temporal prediction or *inter-image prediction* which can improve the compression of a sequence of images. Usually block-based, it comprises, for a current image block, the generation of a prediction image block and the coding of a difference between the current image block and the prediction image block. The more the image block is correlated with the current image block, the lower is the number of bits required to code the current image block and therefore the more effective is the compression.

As an example of such methods, it is possible to cite the ones defined by the standard MPEG-4 AVC/H.264 described in the ISO/IEC document 14496-10, or even the ones defined by the standard HEVC (High Efficiency Video Coding) described in the document (B. Bross, W.J. Han, G. J. Sullivan, J.R. Ohm, T. Wiegand JCTVC-K1003, "High Efficiency Video Coding (HEVC) text specification draft 9," Oct 2012.).

Historically, standards such as AVC and HEVC can compress images and videos on the basis of pixels whose components are initially coded in 8 bits. In the extended versions of these standards, the dynamic of the integer values taken at the input of the encoder can go far beyond, for example up to 14 bits.

To be able to code sequences of high dynamic images (typically greater than 14 bits) by using standard coding methods only accepting as input, sequences of lower dynamic images (14 bits), it is necessary to convert the values of the pixels of the images of these sequences of images so that these values are expressed in the target dynamic, that is accepted by these standard coding methods. This conversion is carried out per group of pictures (GOP) by applying a configurable transformation to all the images belonging to this group of pictures. The parameters of this transformation are determined by at least one image of the group of pictures.

As this conversion is defined and applied per group of pictures, it will vary from one group of pictures to another.

Moreover, as the standard coding methods described above encode a residual error resulting from a temporal prediction (inter-image), one or more images of an anterior or posterior (temporally) group of pictures can be used to code a residual error relating to an image belonging to a current group of pictures.

However, if these images of the anterior or posterior group of pictures, usually called reference images, have been quantized via parameters specific to the anterior or posterior group of pictures, it will then be difficult to obtain a good temporal prediction with the images of the current group of pictures as this latter group of pictures will have been quantized with the parameters relating to this current group of pictures that can be different from the ones relating to the anterior or posterior group of pictures.

Consequently, there is a loss of temporal coherency which interferes with the operation of the motion estimator used to temporally predict an image of a sequence of images. The quality of the inter-image predictions is then reduced and the cost of coding the motion vectors from the motion estimator increases owing to a less uniform motion field. There is therefore a reduction in the performances of these types of coder.

Document EP2445214 A1 discloses video coding that combines dynamic range mapping with temporal prediction, using weighted prediction such as to make use of a mapping parameter from a reference frame for coding a current temporally predicted frame.

### 3. Summary of the invention

The purpose of the invention is to overcome at least one of the disadvantages of the prior art.

The invention is set out in the appended set of claims; the further examples called embodiments in the description are illustrative examples.

### 4. List of figures

The invention will be better understood and illustrated by means of non-restrictive examples and advantageous implementations, with reference to the accompanying drawings, wherein:

- **Fig. 1** shows a diagram of the steps of a predictive coding/decoding method of a group of pictures $GOP_i$ of a sequence of images,
- **Fig. 2 and 3** illustrate examples of the coding/decoding method,
- **Fig. 4** illustrates the principle of a tone mapping method,
- **Fig. 5** shows an architecture example of a device configured to implement a coding/decoding method described in relation to **Fig. 1-3**.

### 5. Detailed description of the invention

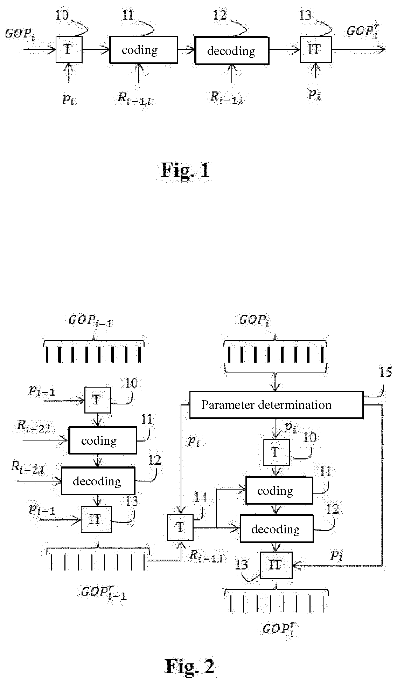

**Fig. 1** represents a diagram of the steps of a predictive coding/decoding method of a group of pictures $GOP_i$ of a sequence of images,

The method comprises a dynamic conversion step 10, a coding step 11, a decoding step 12 and a step 13 for dynamic inverse conversion IT.

The method is described here as comprising four steps 10, 11, 12 and 13. However, it can be deduced from this description that a coding method (step 10 and 11) can be implemented without the decoding part and that a decoding method (steps 12 and 13) can be implemented without the coding part (the data to decode can then be received via a communication network for example or be obtained from a memory).

During step 10, a transform T is applied to each image of a group of pictures $GOP_i$ to convert the dynamic of the values of the pixels of these images such that these values are expressed in a target dynamic. This target dynamic is, for example, determined so that the images of a group of pictures are viewed on a screen or so that these images are coded by a standard coding method.

When the values of the pixels of the images of the group of pictures $GOP_i$ are floating values, this transform T can convert these floating values into integer values thus expressed in the target dynamic.

According to **Fig. 1**, the dynamic is determined so that the converted dynamic images are coded by step 11 and decoded by step 12.

During step 11, the images of integer values thus obtained are coded by inter-image prediction.

Inter-image prediction can improve the compression of the images of a group of pictures. It comprises, for a current block of an image $GOP_{i,p}$ (**p** designating the index of the image in a current group of pictures $GOP_i$), the generation of a prediction block from one or more images, called reference, $R_{i-1,l}$ (**l** designating the index of the image in a group of pictures temporally anterior or posterior to the current group of pictures $GOP_i$), and the coding of a difference between the current block and the prediction block. The more the prediction block is correlated with the current block, the lower is the number of bits required to code the current block and therefore the more effective is the compression. What follows is possibly a DCT transformation (Discrete Cosinus Transform), then entropic coding of this difference and a coding of the prediction information such that, for example, information relating to a motion vector that can designate the position of the prediction block in a reference image.

During step 12, the coded data that is derived from step 11 is decoded by inter-image prediction.

As an example of such coders/decoders, it is possible to cite the ones defined by the standard MPEG-4 AVC/H.264 described in the ISO/IEC document 14496-10, or even the ones defined by the standard HEVC (High Efficiency Video Coding) described in the document (B. Bross, W.J. Han, G. J. Sullivan, J.R. Ohm, T. Wiegand JCTVC-K1003, "High Efficiency Video Coding (HEVC) text specification draft 9," Oct 2012.).

During step 13, and IT transform, inverse of the transform T is applied to each decoded image (reconstructed) $GOP_{i,p}^r$ of the current group of pictures.

The transform T and its inverse IT can be configured. The parameters $p_i$ are defined by at least one image $GOP_{i,p}$ of the group of pictures $GOP_i$.

It can be noted that the inverse transform requires the parameters $p_i$ used by the transform T. Hence, in a context of transmission between two remote devices, these parameters $p_i$ are transmitted.

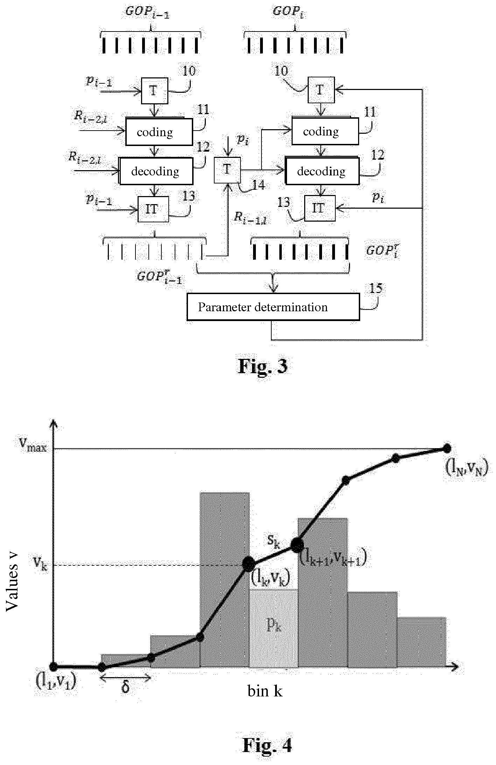

According to a characteristic of the invention illustrated in **Fig. 2** and **3**, the method comprises a step 14 for converting the values of the pixels of each reference image from the transform T thus configured ($p_i$) identically to the one used to convert the values of the pixels of the images of the group of pictures $GOP_i$.

**Fig. 2 et 3** illustrate examples of the coding method.

In these **Fig. 2 and 3**, two groups of pictures $GOP_i$ and $GOP_{i-1}$ are shown. The lines in bold show the original images and the thin lines the images once transformed, coded, decoded then inverse transformed.

The group of pictures $GOP_i$ is considered as a current group of pictures whereas the group of pictures $GOP_{i-1}$ is considered as the group of pictures to which the reference image $R_{i-1,l}$ belongs (in this case the last image of the group of pictures) used to code the images of the group of pictures $GOP_i$.

This example is provided for information only and does not restrict the scope of the invention which easily extends to the case where several reference images belonging to several groups of pictures may be used for the inter-image prediction or even in the case where one of these reference images belongs to a group of pictures temporally posterior to the current group of pictures. The only restriction is that each reference image must be reconstructed (decoded in inverse transformed) at the time the images of the group of pictures $GOP_i$ are coded (or decoded).

The values of the pixels of the images of the group of pictures $GOP_{i-1}$ are transformed using parameters $p_{i-1}$ (step 10) then coded (step 11) and decoded (step 12) by using a reference image **l** of a group of pictures $GOP_{i-2}$ (not shown). The inverse transform IT that uses the parameters $p_{i-1}$ is then applied to the images of the group of pictures $GOP_{i-1}$ (step 13). The reconstructed group of pictures $GOP_{i-1}^r$ is then obtained.

The transform T with the parameters $p_i$ is applied (step 14) to the decoded reference image $R_{i-1,l}$ (reconstructed) belonging to the reconstructed group of pictures $GOP_{i-1}^r$.

The images of the group of pictures $GOP_i$ are transformed using parameters $p_i$ (step 10) then coded (step 11) and decoded (step 12) by using a reference image $R_{i-1,l}$ thus transformed (resultant of step 14).

The transform IT that uses the parameters $p_i$ is then applied to the images of the group of pictures $GOP_i$ (step 13) and the reconstructed group of pictures $GOP_{i-1}^r$ is then obtained.

According to an example illustrated in **Fig. 2**, the parameters $p_i$ used to transform the images of the current group of pictures $GOP_i$ and each reconstructed reference image $R_{i-1,l}$ are determined (step 15) from the images of this current group of pictures.

According to this example, the parameters can then be pre-calculated for all the groups of pictures of a sequence of images when the coding method is used to code a sequence of images.

According to a variant illustrated in **Fig. 3,** the parameters $p_i$ used to transform the images of the current group of pictures $GOP_i$ and each reconstructed reference image $R_{i-1,l}$ are determined by also considering the reconstructed versions after transformation, coding, decoding, and inverse transformation of these reference images $R_{i-1,l}$. These reconstructed versions belong to the reconstructed group of pictures $GOP_{i-1}^r$.

According to an example relating to the case where the values of the pixels of the current group of pictures are floating values, the transformation T consists in quantizing these floating values to obtain integer values expressed on a target dynamic.

It can be noted that like a transform T configured by parameters $p_i$, here a quantization, is applied to all the images of the group of pictures, there is no interference with the temporal predictions between the images of this group of pictures. However, images belonging to different groups of pictures may have undergone transforms configured differently. This is frequently referred to as adaptive quantization by group of pictures.

An example of adaptive quantization of floating values consists initially in concatenating the exponent bits and mantissa bits and interpreting them as integer values. This representation approximates a logarithmic coding of the floating values and can carry out a first conversion to integer values without loss of data. However, the integer values obtained are most frequently expressed in a dynamic that is not the one expected.

In this case, the integer values obtained are quantized adaptively to be represented by integer values expressed in the target dynamic, for example equal to n=14 bits (integer values between 0 and $2^{14}-1$). The adaptive quantization is then based on the minimum and maximum values of the pixels belonging to the images of a group of pictures (respectively noted $x_{min}$ and $x_{max}$). These minimum and maximum values are the parameters $p_i$ that must be transmitted in a transmitting context.

The integer value transformed (here quantized) x' is then given by:

$$x' = x - x_{min} \qquad\qquad\qquad \text{if } x_{max} - x_{min} <= 2^n - 1$$

$$x' = (x - x_{min}).(2^n - 1) / (x_{max} - x_{min})$$

otherwise

The inverse transform IT requires that the values $x_{min}$ and $x_{max}$ are known and which must be transmitted in a transmission context. The integer value once the inverse transform IT is applied $x_{dec}$ is then given by:

$$x_{dec} = x'' + x_{min} \qquad\qquad\qquad \text{if } x_{max} - x_{min} <= 2^n - 1$$

$$x_{dec} = x''.(x_{max} - x_{min}) / (2^n - 1) + x_{min}$$

otherwise

wherein x" is the quantized/coded/decoded integer value.

The losses caused by this adaptive quantization thus depend on the real dynamic of the floating values of the images of the group of pictures. In the best of cases, if $x_{max} - x_{min} <= 2^n-1$, this step causes no loss.

According to an example relating to the case where the values of the pixels of the current group of pictures are floating values, the transform T consists in reducing the dynamic of these floating values while using a *tone mapping* method.

For example, the method described the article (Z. Mai, H. Mansour, R. Mantiuk, P. Nasiopoulos, R. Ward and W. Heidrich. "On-the-fly tone mapping for backward-compatible high dynamic range image/video compression" ISCAS, 2010) can be used.

The principle of this method, illustrated in **Fig. 4**, is to account for the distribution of the floating values to minimize a total quantization error.

For this purpose, the logarithm of the floating values (luminance) of the pixels of the images of the group of pictures is calculated. Hence, a floating value $l=\log_{10}(L)$ is associated with each pixel of each images of the group of pictures.

A histogram of the floating values l is calculated by considering *bins* of size $\delta=0.1$ for example.

For each bin k (k=1..N), the probability $pr_k$ that a pixel belongs to this bin and the value $l_K = \delta.k$ assigned to this bin are deduced.

A slope value $s_k$ is then assigned to each bin k using a model described for example as follows:

$$s_k = \frac{v_{max} \cdot pr_k^{1/3}}{\delta . \sum_{k=1}^{N} pr_k^{1/3}}$$

with $v_{max}$ being the maximum value of the integer representation considered ($v_{max} = 2^n-1$ if quantization is attempted for a target dynamic of n bits).

A *piecewise tone-mapping curve* is then obtained by aggregation of the N values of slopes $s_k$. Hence, for a floating value **l** such that $l_k < l <= l_{k+1}$, an integer value v is assigned, defined by:

$$v = (l - l_k).s_k + v_k$$

where the values $v_k$ are defined from values $s_k$ by $v_{k+1} = \delta.s_k + v_k$

A rounded off value v is thus the transformed integer value that is expressed in the interval [0, $2^n-1$].

The parameters $p_i$ are thus the N values of slopes $s_k$ that, in a transmission context, must be transmitted.

The inverse transform IT consists, for a transformed, coded and decoded integer value **v**, to determine **k** such that $v_k <= v < v_{k+1}$, to calculate a value $l_{dec}$ according to the following equation:

$$l_{dec} = l_k + \frac{(v-v_k)}{s_k} \qquad (2)$$

and finally to calculate the floating value Ldec of the pixel once the IT transformation is applied according to the following equation: Ldec = $10^{l_{dec}}$ .

As a variant, to prevent the risk of division by 0 in the equation (2), in the case where $s_k$=0, a minimum non null value $\varepsilon$ is assigned for $s_k$.

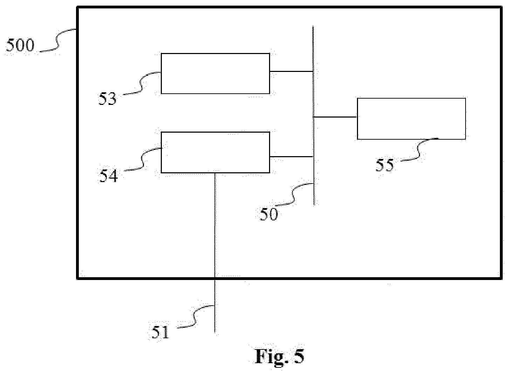

The invention also relates to a coding and/or decoding device 500 described with reference to **Fig. 5**.

The device 500 comprises the following elements, interconnected by a digital addressing and data bus 51:

- A *Central Processing Unit* 53,
- A memory 55,
- A network interface 54, for interconnections between the device 500 and other remote devices connected via a connection 51,

The central processing unit 53 can be implemented by a microprocessor, possibly dedicated, a microcontroller also possibly dedicated, etc. The memory 55 can be implemented in volatile and/or non-volatile form such as a RAM (Random Access Memory), a hard disk, an EPROM (Erasable Programmable ROM), etc. The device 500 is configured to implement a method according to the invention described in relation to **Fig. 1 to 4**.

For this purpose, means 53, 54 and possibly 55 cooperate with each other to predictively code the images of a group of pictures of a sequence of images by using at least one reference image belonging to a group of pictures other than the group of pictures to code.

Means 53, 54 and possibly 55 cooperate with each other to convert the values of the pixels of the group of pictures from a configurable transform in such a manner that these values are expressed in a target dynamic.

Means 53, 54 and possibly 55 cooperate with each other to convert the values of the pixels of each reference images from the transform thus configured identically to the one used to convert the values of the pixels of the images of the group of pictures to code.

In **Figure 5**, the modules shown are functional units that may or may not correspond to physically distinguishable units. For example, these modules or some of them can be grouped together in a single component or circuit, or constitute functions of the same software. *On the contrary*, some modules may be composed of separate physical entities. The inter-image prediction devices compatible with the invention are implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components integrated into a device or even in a form of a mix of hardware elements and software elements.

Although not described, the present embodiments or examples can be used in combination or sub-combination.

The expression "according to an embodiment" or "according to an example" means that a characteristic or structure or specific means described in relation to the embodiment can be included in at least one implementation of the invention. The occurrences of this expression at many points in the description do not necessarily refer to the same embodiment or example, or necessarily to separate or alternative embodiments or examples that are obligatorily and mutually exclusive.

The invention is set out in the appended set of claims. The numerical references that appear in the claims are only provided for information and must not be considered as elements that restrict the scope of the claims.

**Claims**

1. A predictive coding method of a first group of pictures belonging to a sequence of pictures using at least one reference picture of a second group of pictures other than the first group of pictures to be coded, the method comprising:

   - determining (15) parameters (pi) of a transform from the pictures of the first group of pictures;
   - applying (14) the transform using said determined parameters to said at least one reference picture ($R_{i-1,l}$) in such a manner that the pixel values of said at least one reference picture are expressed in a target dynamic range;
   - applying the transform (10) using said determined parameters to the pictures of the first group of pictures;
   - predictive coding (11) the pictures of the first group of pictures using said at least one reference picture thus transformed,
   **characterized in that** the transform is a tone mapping and the parameters are values of slopes of a piecewise tone-mapping curve, the values of the slopes being obtained from a histogram of values associated with each pixel of each of the pictures of the first group of pictures.

2. A predictive decoding method of a first group of pictures belonging to a sequence of pictures using at least one reference picture of a second group of pictures other than the first group of pictures, the method comprising:

   - predictive decoding (12) encoded pictures of the first group of pictures from the at least one reference picture;
   - obtaining (13) parameters of an inverse transform and applying said inverse transform to the decoded pictures of the first group of pictures; wherein the transform is an inverse of a transform determined from the pictures of the first group of pictures, the transform being a tone mapping and the parameters are values of slopes of a piecewise tone-mapping curve, the values of the slopes being obtained from a histogram of values associated with each pixel of each of the pictures of the first group of pictures.

3. A predictive coding device of a first group of pictures belonging to a sequence of pictures, comprising means for:

   - predictively coding the pictures of the first group of pictures by using at least one reference picture of a second group of pictures other than the first group of pictures to be coded:
   - determining parameters of a transform from the pictures of the first group of pictures;
   - applying the transform using said determined parameters to said at least one reference picture in such a manner that their pixel values are expressed in a target dynamic range;
   - applying the transform using said determined parameters to the picture of the first group of pictures;
   - predictive coding the pictures of the first group of pictures using said at least one reference picture thus transformed
   **characterized in that** the transform is a tone mapping and the parameters are values of slopes of a piecewise tone-mapping curve, the values of the slopes being obtained from a histogram of values associated with each pixel of each of the pictures of the first group of pictures.

4. A predictive decoding device of a first group of pictures belonging to a sequence of pictures, comprising means for:

   - predictively decoding (12) encoded pictures of the first group of pictures from the at least one reference picture of a second group of pictures different from the first group of pictures;
   - obtaining (13) parameters of an inverse transform and applying said inverse transform to the decoded pictures of the first group of pictures; wherein the transform is an inverse of a transform determined from the pictures of the first group of pictures, the transform being a tone mapping and parameters of said transform are values of slopes of a piecewise tone-mapping curve , the values of the slopes being obtained from a histogram of values associated with each pixel of each of the pictures of the first group of pictures.

**Patentansprüche**

1. Verfahren für die prädiktive Codierung einer ersten Gruppe von Bildern, die zu einer Folge von Bildern gehören, unter Verwendung mindestens eines Referenzbilds einer zweiten Gruppe von Bildern, die von der ersten Gruppe zu codierender Bilder verschieden ist, wobei das Verfahren umfasst:

   - Bestimmen (15) von Parametern (pi) einer Transformation von den Bildern der ersten Gruppe von Bildern;
   - Anwenden (14) der Transformation unter Verwendung der bestimmten Parameter auf das mindestens eine Referenzbild ($R_{i-1,l}$) in der Weise, dass die Pixelwerte des mindestens einen Referenzbilds in einem Zieldynamikbereich ausgedrückt werden;
- Anwenden der Transformation (10) unter Verwendung der bestimmten Parameter auf die Bilder der ersten Gruppe von Bildern;
- prädiktives Codieren (11) der Bilder der ersten Gruppe von Bildern unter Verwendung des mindestens einen auf diese Weise transformierten Referenzbilds,
**dadurch gekennzeichnet, dass** die Transformation eine Dynamikkompression ist und dass die Parameter Werte von Anstiegen einer stückweisen Dynamikkompressionskurve sind, wobei die Werte der Anstiege aus einem Histogramm von Werten erhalten werden, die jedem Pixel jedes der Bilder der ersten Gruppe von Bildern zugeordnet sind.

2. Verfahren für die prädiktive Decodierung einer ersten Gruppe von Bildern, die zu einer Folge von Bildern gehören, unter Verwendung mindestens eines Referenzbilds einer zweiten Gruppe von Bildern, die von der ersten Gruppe von Bildern verschieden ist, wobei das Verfahren umfasst:

- prädiktives Decodieren (12) codierter Bilder der ersten Gruppe von Bildern von dem mindestens einen Referenzbild;
- Erhalten (13) von Parametern einer inversen Transformation und Anwenden der inversen Transformation auf die decodierten Bilder der ersten Gruppe von Bildern; wobei die Transformation eine inverse einer aus den Bildern der ersten Gruppe von Bildern bestimmten Transformation ist, wobei die Transformation eine Dynamikkompression ist und wobei die Parameter Werte von Anstiegen einer stückweisen Dynamikkompressionskurve sind, wobei die Werte der Anstiege aus einem Histogramm von Werten erhalten werden, die jedem Pixel jedes der Bilder der ersten Gruppe von Bildern zugeordnet sind.

3. Vorrichtung für die prädiktive Codierung einer ersten Gruppe von Bildern, die zu einer Folge von Bildern gehören, wobei die Vorrichtung Mittel umfasst zum:

- prädiktiven Codieren der Bilder der ersten Gruppe von Bildern unter Verwendung mindestens eines Referenzbilds einer zweiten Gruppe von Bildern, die von der ersten Gruppe zu codierender Bilder verschieden ist:
- Bestimmen von Parametern einer Transformation von den Bildern der ersten Gruppe von Bildern;
- Anwenden der Transformation unter Verwendung der bestimmten Parameter auf das mindestens eine Referenzbild in der Weise, dass ihre Pixelwerte in einem Zieldynamikbereich ausgedrückt werden;
- Anwenden der Transformation unter Verwendung der bestimmten Parameter auf das Bild der ersten Gruppe von Bildern;
- prädiktives Codieren der Bilder der ersten Gruppe von Bildern unter Verwendung des mindestens einen auf diese Weise transformierten Referenzbilds,
**dadurch gekennzeichnet, dass** die Transformation eine Dynamikkompression ist und dass die Parameter Werte von Anstiegen einer stückweisen Dynamikkompressionskurve sind, wobei die Werte der Anstiege aus einem Histogramm von Werten erhalten werden, die jedem Pixel jedes der Bilder der ersten Gruppe von Bildern zugeordnet sind.

4. Vorrichtung für die prädiktive Decodierung einer ersten Gruppe von Bildern, die zu einer Folge von Bildern gehören, wobei die Vorrichtung Mittel umfasst zum:

- prädiktiven Decodieren (12) codierter Bilder der ersten Gruppe von Bildern von dem mindestens einen Referenzbild einer zweiten Gruppe von Bildern, die von der ersten Gruppe von Bildern verschieden ist;
- Erhalten (13) von Parametern einer inversen Transformation und Anwenden der inversen Transformation auf die decodierten Bilder der ersten Gruppe von Bildern; wobei die Transformation eine inverse einer aus den Bildern der ersten Gruppe von Bildern bestimmten Transformation ist, wobei die Transformation eine Dynamikkompression ist und wobei die Parameter der Transformation Werte von Anstiegen einer stückweisen Dynamikkompressionskurve sind, wobei die Werte der Anstiege aus einem Histogramm von Werten erhalten werden, die jedem Pixel jedes der Bilder der ersten Gruppe von Bildern zugeordnet sind.

**Revendications**

1. Procédé de codage prédictif d'un premier groupe d'images appartenant à une séquence d'images à l'aide d'au moins une image de référence d'un deuxième groupe d'images différent du premier groupe d'images à coder, le procédé comprenant :

- la détermination (15) des paramètres (pi) d'une transformée à partir des images du premier groupe d'images ;
- l'application (14) de la transformée à l'aide desdits paramètres déterminés à ladite au moins une image de référence ($Ri_{-1,l}$) de sorte que les valeurs de pixel de ladite au moins une image de référence soient exprimées dans une plage dynamique cible ;
- l'application de la transformée (10) à l'aide desdits paramètres déterminés aux images du premier groupe d'images ;
- le codage prédictif (11) des images du premier groupe d'images à l'aide de ladite au moins une image de référence ainsi transformée,
**caractérisé en ce que** la transformée est un mappage de tonalité et les paramètres sont des valeurs de pentes d'une courbe de mappage de tonalité par morceaux, les valeurs des pentes étant obtenues à partir d'un histogramme de valeurs associées à chaque pixel de chacune des images du premier groupe d'images.

2. Procédé de décodage prédictif d'un premier groupe d'images appartenant à une séquence d'images à l'aide d'au moins une image de référence d'un deuxième groupe d'images différent du premier groupe d'images, le procédé comprenant :

- le décodage prédictif (12) des images codées du premier groupe d'images à partir de l'au moins une image de référence ;
- l'obtention (13) des paramètres d'une transformée inverse et l'application de ladite transformée inverse aux images décodées du premier groupe d'images ; où la transformée est l'inverse d'une transformée déterminée à partir des images du premier groupe d'images, la transformée étant un mappage de tonalité, et les paramètres sont des valeurs de pentes d'une courbe de mappage de tonalité par morceaux, les valeurs des pentes étant obtenues à partir d'un histogramme de valeurs associées à chaque pixel de chacune des images du premier groupe d'images.

3. Dispositif de codage prédictif d'un premier groupe d'images appartenant à une séquence d'images, comprenant des moyens pour :

- coder de façon prédictive les images du premier groupe d'images à l'aide d'au moins une image de référence d'un deuxième groupe d'images différent du premier groupe d'images à coder ;
- déterminer les paramètres d'une transformée à partir des images du premier groupe d'images ;
- appliquer la transformée à l'aide desdits paramètres déterminés à ladite au moins une image de référence de sorte que ses valeurs de pixel soient exprimées dans une plage dynamique cible ;
- appliquer la transformée à l'aide desdits paramètres déterminés à l'image du premier groupe d'images ;
- coder de façon prédictive les images du premier groupe d'images à l'aide de ladite au moins une image de référence ainsi transformée
**caractérisé en ce que** la transformée est un mappage de tonalité et les paramètres sont des valeurs de pentes d'une courbe de mappage de tonalité par morceaux, les valeurs des pentes étant obtenues à partir d'un histogramme de valeurs associées à chaque pixel de chacune des images du premier groupe d'images.

4. Dispositif de décodage prédictif d'un premier groupe d'images appartenant à une séquence d'images, comprenant des moyens pour :

- décoder de façon prédictive (12) les images codées du premier groupe d'images à partir de l'au moins une image de référence d'un deuxième groupe d'images différent du premier groupe d'images ;
- obtenir (13) les paramètres d'une transformée inverse et appliquer ladite transformée inverse aux images décodées du premier groupe d'images ; où la transformée est l'inverse d'une transformée déterminée à partir des images du premier groupe d'images, la transformée étant un mappage de tonalité, et les paramètres de ladite transformée sont des valeurs de pentes d'une courbe de mappage de tonalité par morceaux, les valeurs des pentes étant obtenues à partir d'un histogramme de valeurs associées à chaque pixel de chacune des images du premier groupe d'images.

**Fig. 1**

**Fig. 2**

**Fig. 3**

**Fig. 4**

500

53

54

50

55

51

**Fig. 5**

## REFERENCES CITED IN THE DESCRIPTION

### Patent documents cited in the description

- EP 2445214 A1

### Non-patent literature cited in the description

- High Dynamic Range video. **K. MYSZKOWSKI ; R MANTIUK ; G KRAWCZYK.** Synthesis Lectures on Computer Graphics and Animation. Morgan & Claypool Publishers, 2008
- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012
- **Z. MAI ; H. MANSOUR ; R. MANTIUK ; P. NASIOPOULOS ; R. WARD ; . HEIDRICH.** On-the-fly tone mapping for backward-compatible high dynamic range image/video compression. *IS-CAS,* 2010